# EUROPEAN PATENT SPECIFICATION

(11) **EP 3 522 422 B1**
(45) Date of publication and mention of the grant of the patent: **22.09.2021**
(21) Application number: 17867805.8
(22) Date of filing: 30.10.2017
(51) Int. Cl.: H04L 1/18

(54) **INFORMATION TRANSMISSION METHOD AND RELATED DEVICE**
INFORMATIONSÜBERTRAGUNGSVERFAHREN UND ZUGEHÖRIGE VORRICHTUNG
PROCÉDÉ DE TRANSMISSION D'INFORMATIONS ET DISPOSITIF ASSOCIÉ

(30) Priority: 03.11.2016 CN 201610974355
(43) Date of publication of application: 07.08.2019
(73) Proprietor: Huawei Technologies Co., Ltd., Longgang District Shenzhen, Guangdong 518129 (CN)
(72) Inventor: DU, Bai, Shenzhen Guangdong 518129 (CN); ZHANG, Peng, Shenzhen Guangdong 518129 (CN); MA, Liang, Shenzhen Guangdong 518129 (CN)
(74) Representative: Pfenning, Meinig & Partner mbB
(86) International application number: PCT/CN2017/108353
(87) International publication number: WO 2018/082522

(56) References cited:
- CN-A- 101 667 900
- CN-A- 101 874 375
- US-A1- 2012 027 006
- NOKIA ET AL: "Punctured Scheduling for Low Latency Transmissions", 3GPP DRAFT; R1-1609747_PUNCTURED SCHEDULING_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051149780, Retrieved from the Internet: URL:http://www.3gpp.org/ftp/Meetings_3GPP_ SYNC/RAN1/Docs/ [retrieved on 2016-10-09]
- QUALCOMM INCORPORATED: "Coverage enhancement techniques", 3GPP DRAFT; R1-1610438 COVERAGE ENHANCEMENT TECHNIQUES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051160122, Retrieved from the Internet: URL:http://www.3gpp.org/ftp/tsg_ran/WG1_RL 1/TSGR1_86b/Docs/ [retrieved on 2016-10-09]
- QUALCOMM INCORPORATED: "Erasure coding and HARQ design", 3GPP DRAFT; R1-1610143_ERASURE CODING AND HARQ DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150166, Retrieved from the Internet: URL:http://www.3gpp.org/ftp/Meetings_3GPP_ SYNC/RAN1/Docs/ [retrieved on 2016-10-09]
- Nokia; Alcatel-Lucent Shanghai Bell: "Performance of mMTC and URLLC channel coding canidates R1-1609594", 3GPP TSG-RAN WG1 #86 bis, 14 October 2016 (2016-10-14), XP051149631, Lissabon, Portugal

## Description

### TECHNICAL FIELD

This application relates to the field of communications technologies, and in particular, to an information transmission method and a related apparatus.

### BACKGROUND

In a Long Term Evolution (Long Term Evolution, LTE) system, to-be-transmitted information is segmented in a form of a transport block (Transmission Block, TB) based on an actual requirement. Each transport block additionally includes cyclic redundancy check (Cyclic Redundancy Check, CRC) bits of the transport block. One transport block is transmitted in each transmission time interval (Transmission Time Interval, TTI for short). After a CRC is added, a transport block is usually split into a plurality of code blocks (Code Block, CB) due to a code length limit. Therefore, in actual transmission, a transport block includes a plurality of code blocks.

In an existing LTE protocol, a hybrid automatic repeat request mechanism using a TB as a basic unit is used to ensure that a receive end can obtain a good data pass rate in various test scenarios. In each TB reception processing process, the receive end may decode each CB, and determine, based on a decoding result, whether each CB is successfully received. If one of a plurality of CBs included in a TB fails to be received, the receive end provides a feedback, requesting a transmit end to retransmit the entire TB, and therefore resource waste is caused. Especially, in a future 5th generation mobile communications system (that is, a 5G system), because a used bandwidth is larger, and a quantity of CBs included in a TB is larger, retransmission causes severer waste.

To resolve the foregoing problem, an existing solution is that the receive end feeds back a CB that fails to be received to the transmit end, so that during retransmission, the transmit end retransmits only the CB that fails to be received. However, according to this solution, when a quantity of CBs is large, if the receive end feeds back the CB that fails to be received to the transmit end, a lot of overheads are required.

In conclusion, currently, an information transmission method is urgently needed to reduce feedback overheads in an information transmission process.

"Punctured Scheduling for Low Latency Transmissions" (NOKIA ET AL, vol. RAN WG1, no. Lisbon, Portugal; 20161010 - 20161014, (20161009), 3GPP DRAFT; R1-1609747_PUNCTURED SCHEDULING_FINAL, 3RD GENERATION PARTNERSHIP PROJECT (3GPP)) discloses that immediately after transmission of ht eTB that was punctured, the eNB send the punctured data part of the UE without awaiting any HARQ feedback.

"Coverage enhancement techniques" (QUALCOMM INCORPORATED, vol. RAN WG1, no. Lisbon, Portugal; 20161010 - 20161014, (20161009), 3GPP DRAFT; R1-1610438 COVERAGE ENHANCEMENT TECHNIQUES, 3RD GENERATION PARTNERSHIP PROJECT (3GPP)) discloses that the eNB triggers a PUSCH retransmission before processing the first one.

"Erasure coding and HARQ design" (QUALCOMM INCORPORATED, vol. RAN WG1, no. Lisbon, Portugal; 20161010 - 20161014, (20161009), 3GPP DRAFT; R1-1610143_ERASURE CODING AND HARQ DESIGN, 3RD GENERATION PARTNERSHIP PROJECT (3GPP)) discusses outer coding with dynamic overhead based on HARQ feedback.

### SUMMARY

In the current application, the term "system bits" and the term "systematic bits" are used interchangeably.

The invention is set out in independent claims 1, 5, 9 and 12. The figures and passages describing Embodiments 2, 3, 4 and 5 in this specification are not according to the invention and are present for illustrative purposes only.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention.
FIG. 1a is a schematic architectural diagram of a system to which an embodiment of the present invention is applicable;
FIG. 1b is a schematic diagram in which a first device punctures a resource to which a TB is mapped;
FIG. 2 is a schematic flowchart corresponding to an information transmission method according to Embodiment 1 of the present invention;
FIG. 3 is a schematic diagram of a case in which a plurality of CBs are punctured according to an embodiment of the present invention;
FIG. 4 is a schematic diagram of a CB subgroup according to an embodiment of the present invention;
FIG. 5 is a schematic flowchart corresponding to an information transmission method according to Embodiment 2;
FIG. 6 is a schematic structural diagram of a device according to Embodiment 4; and
FIG. 7 is a schematic structural diagram of a device according to Embodiment 5.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention.

In the specification, claims, and accompanying drawings of this application, the terms "first", "second", and so on are intended to distinguish between different objects but do not indicate a particular order. In addition, the terms "including", "having", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

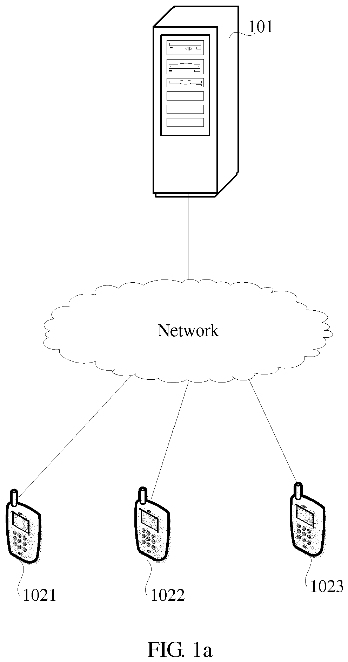

An information transmission method in the embodiments of the present invention is applicable to a plurality of system architectures. FIG. 1a is a schematic architectural diagram of a system to which an embodiment of the present invention is applicable. As shown in FIG. la, the system architecture includes a network device 101 and one or more terminals, for example, a first terminal 1021, a second terminal 1022, and a third terminal 1023 shown in FIG. 1a. The network device 101 may perform information transmission with the first terminal 1021, the second terminal 1022, and the third terminal 1023 by using a network. Further, the first terminal 1021, the second terminal 1022, and the third terminal 1023 may also transmit information to each other.

In this embodiment of the present invention, the network device may be a base station device (base station, BS). The base station device may also be referred to as a base station, and is an apparatus deployed in a radio access network and configured to provide a wireless communication function. For example, a device providing a base station function in a 2G network includes a base transceiver station (base transceiver station, BTS) and a base station controller (base station controller, BSC); a device providing a base station function in a 3G network includes a NodeB (NodeB) and a radio network controller (radio network controller, RNC); a device providing a base station function in a 4G network includes an evolved NodeB (evolved NodeB, eNB); a device providing a base station function in a 5G network includes a new radio NodeB (New Radio NodeB, gNB), a centralized unit (Centralized Unit, CU), a distributed unit (Distributed Unit), and a new radio controller; and a device providing a base station function in a WLAN is an access point (Access Point, AP).

The terminal may be a device (Device) providing voice and/or data connectivity for a user, and may include a wireless terminal and a wired terminal. The wireless terminal may be a handheld device with a radio connection function, or another processing device connected to a radio modem, and may be a mobile terminal that communicates with one or more core networks by using a radio access network. For example, the wireless terminal may be a mobile phone, a computer, a tablet computer, a personal digital assistant (personal digital assistant, PDA for short), a mobile Internet device (mobile Internet device, MID for short), a wearable device, an e-book reader (e-book reader), or the like. For another example, the wireless terminal may also be a portable, pocket-sized, handheld, computer built-in, or in-vehicle mobile device. For another example, the wireless terminal may be a part of a mobile station (mobile station), an access point (access point), or user equipment (user equipment, UE for short).

A communications system to which the system architecture is applicable includes but is not limited to Code Division Multiple Access (Code Division Multiple Access, CDMA) IS-95, Code Division Multiple Access (Code Division Multiple Access, CDMA) 2000, Time Division-Synchronous Code Division Multiple Access (Time Division-Synchronous Code Division Multiple Access, TD-SCDMA), Wideband Code Division Multiple Access (Wideband Code Division Multiple Access, WCDMA), Time Division Duplex-Long Term Evolution (Time Division Duplexing-Long Term Evolution, TDD LTE), Frequency Division Duplex-Long Term Evolution (Frequency Division Duplexing-Long Term Evolution, FDD LTE), Long Term Evolution-Advanced (Long Term Evolution-Advanced, LTE-Advanced), and various future evolved wireless communications systems (for example, a 5G system).

For example, in the 5G system (which may also be referred to as a new radio system), an ultra-reliable and low-latency communication (Ultra-Reliable and Low-Latency Communication, URLLC) service and an enhanced mobile broadband (Enhanced Mobile Broadband, eMBB) service are defined as new service types. The URLLC service requires high reliability and a low latency, but the eMBB service mainly requires a guaranteed peak rate. Therefore, the URLLC service tends to use a scheduling time shorter than that of the eMBB service. When the eMBB service is being transmitted, the URLLC service may directly replace a part of data transmitted by the eMBB service with data of the URLLC service for transmission, and this is referred to as puncturing. Therefore, information transmission failure caused by puncturing occurs during information transmission.

For example, when the network device 101 transmits a TB used for transmitting eMBB service data to the first terminal 1021, if the network device determines that URLLC service data needs to be transmitted to the first terminal 1021, the network device may puncture a resource to which the TB is mapped, that is, replace a part of the eMBB service data in a plurality of CBs with the URLLC service data.

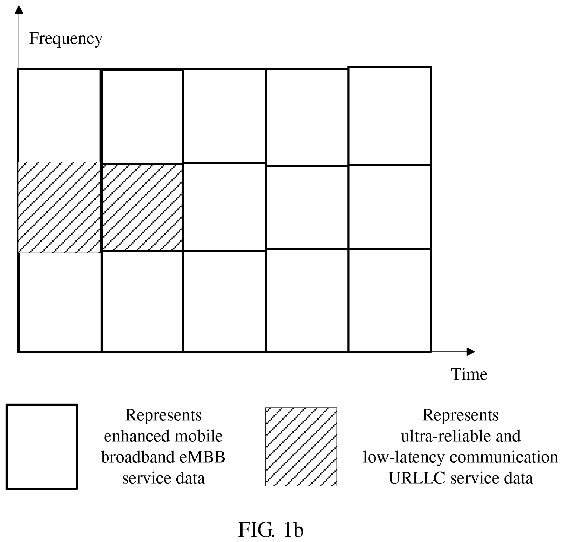

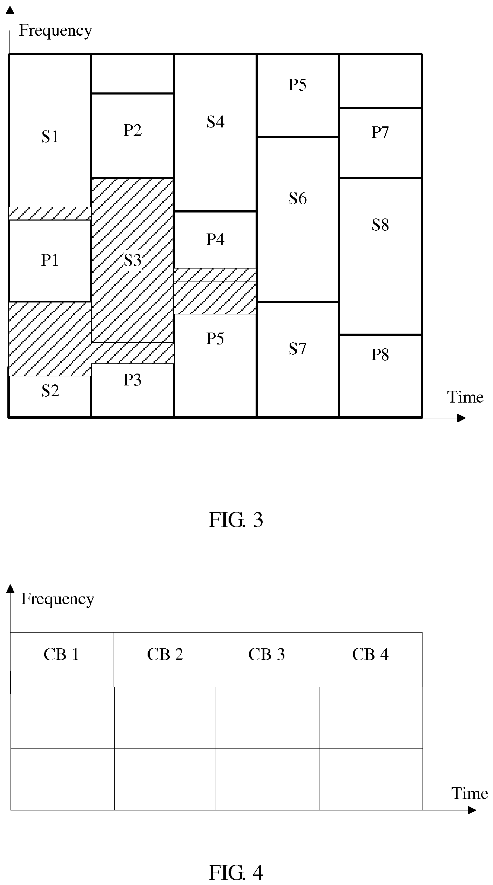

FIG. 1b is a schematic diagram in which a first device punctures a resource to which a TB is mapped. In FIG. 1b, a square may represent an RB. A shadow region is a punctured region, that is, a region in which service data is replaced; original data in the region is eMBB service data; but after the region is punctured, data in the region is URLLC service data. A non-shadow region is an unpunctured region, that is, a region in which service data is not replaced, and data in the region is eMBB service data. It should be noted that, a square in FIG. 3a may also represent an RE.

Therefore, after the first terminal 1021 receives the TB, the plurality of CBs may fail to be received because a part of eMBB service data in a plurality of CBs has been replaced. In this case, the first terminal 1021 needs to provide a feedback to the network device 101. If a receive end feeds back a CB that fails to be received to a transmit end based on the prior art, feeding back every CB that fails to be received requires a lot of feedback overheads because a quantity of CBs included in a TB is relatively large.

On this basis, an embodiment of the present invention provides an information transmission method. Specifically, a first device transmits a TB to a second device, and transmits, before a feedback time corresponding to the TB, original data of the first CB and/or first indication information to the second device, where the first CB is a CB that meets a condition necessary for system bits being occupied, and the first indication information is used to instruct not to transmit feedback information of the first CB. Therefore, feedback overheads are effectively reduced.

Based on the foregoing system architecture, in an application scenario of this embodiment of the present invention, the first device is the network device 101, and the second device is any one of the first terminal 1021, the second terminal 1022, and the third terminal 1023; or in another application scenario, the first device is any one of the first terminal 1021, the second terminal 1022, and the third terminal 1023, and the second device is the network device 101; or in still another application scenario, the first device is any one of the first terminal 1021, the second terminal 1022, and the third terminal 1023, and the second device is one of the first terminal 1021, the second terminal 1022, and the third terminal 1023 other than the any terminal. In other words, the information transmission method in this embodiment of the present invention is applicable to uplink/downlink information transmission between the network device and the terminal, and is also applicable to information transmission between different terminals. This is not specifically limited.

### Embodiment 1

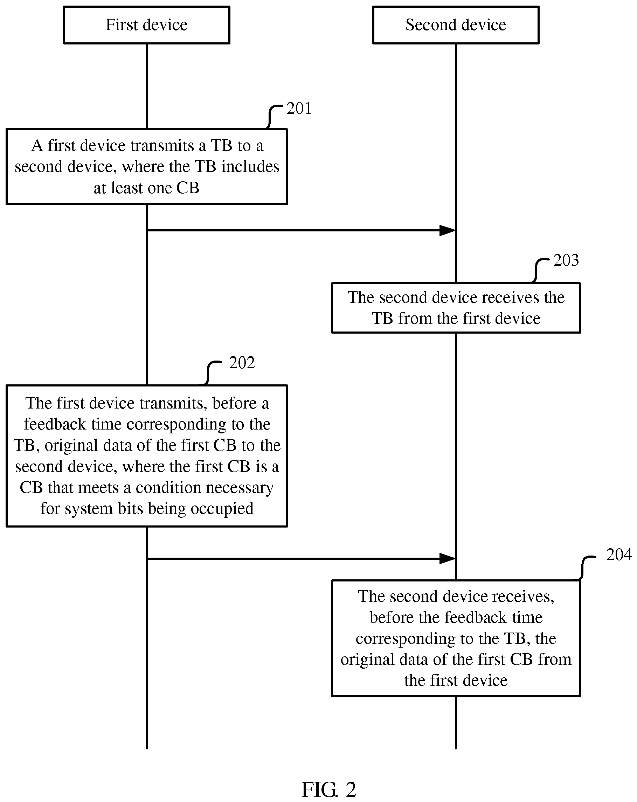

FIG. 2 is a schematic flowchart corresponding to an information transmission method according to Embodiment 1 of the present invention. As shown in FIG. 2, the method includes the following steps.

Step 201: A first device transmits a transport block TB to a second device, where the TB includes at least one code block CB, the at least one CB includes a first CB and/or a second CB, the first CB is a CB that meets a condition necessary for system bits being occupied, and the second CB is a CB that does not meet the condition necessary for the system bits being occupied.

Step 202: The first device transmits, before a feedback time corresponding to the TB, original data of the first CB to the second device.

Step 203: The second device receives the TB from the first device, where the TB includes the at least one CB.

Step 204: The second device receives, before the feedback time corresponding to the TB, the original data of the first CB from the first device.

It should be noted that, numbers of the foregoing steps are merely an example for description of an execution process. A specific sequence of the steps in this embodiment of the present invention is not limited, and some steps may be performed simultaneously, or may be performed without following the numbers. For example, step 202 and step 203 may be performed simultaneously, or step 203 may be performed before step 202.

In this embodiment of the present invention, that the at least one CB includes a first CB and/or a second CB indicates: if the at least one CB is one CB, the CB may be the first CB or the second CB; or if the at least one CB is a plurality of CBs, the plurality of CBs include the first CB and/or the second CB.

The following mainly describes a case in which the at least one CB is a plurality of CBs.

Specifically, in step 201, the first device transmits, to the second device, a TB used for transmitting a piece of service data. If determining that other service data of a higher priority needs to be transmitted, the first device may puncture a resource to which the TB is mapped, that is, replace a part of service data in a plurality of CBs with the other service data of the higher priority. Correspondingly, in step 203, the second device receives the TB from the first device, and specifically, the plurality of CBs in which a part of service data has been replaced with the other service data of the higher priority.

In this embodiment of the present invention, the first device may replace a part of service data in the plurality of CBs with the other service data of the higher priority before the first device transmits the TB to the second device, or when the first device transmits the TB to the second device, or in a transmission process in which the first device transmits the TB to the second device. The service data of the higher priority may be service data requiring high reliability and a low latency, for example, URLLC service data in a 5G system, where a priority of the URLLC service data is higher than that of eMBB service data.

Any one of the plurality of CBs transmitted by the first device to the second device may include system bits and redundancy bits, or may include only redundancy bits, or may include only system bits. Therefore, a punctured position may be a bit in the system bits and a bit in the redundancy bits in the CB, or may be only a bit in the redundancy bits, or may be only a bit in the system bits.

FIG. 3 is a schematic diagram of a case in which a plurality of CBs are punctured, and specifically shows a case in which a CB 1, a CB 2, a CB 3, a CB 4, a CB 5, a CB 6, a CB 7, and a CB 8 are punctured. The CB 1 includes system bits S1 and redundancy bits P1; the CB 2 includes system bits S2 and redundancy bits P2; the CB 3 includes system bits S3 and redundancy bits P3; the CB 4 includes system bits S4 and redundancy bits P4; the CB 5 includes only redundancy bits P5; the CB 6 includes only system bits S6; the CB 7 includes system bits S7 and redundancy bits P7; and the CB 8 includes system bits S8 and redundancy bits P8. A shadow region is used to indicate a punctured region. As shown in FIG. 3, a punctured position in the CB 1 is a small part of bits in the system bits S1, and bits in the redundancy bits P1 are not punctured; a punctured position in the CB 2 is a large part of bits in the system bits S2, and bits in the redundancy bits P2 are not punctured; a punctured position in the CB 3 is all bits in the system bits S3 and a part of bits in the redundancy bits P3; a punctured position in the CB 4 is a part of bits in the redundancy bits P4, and bits in the system bits S4 are not punctured; a punctured position in the CB 5 is a part of bits in the redundancy bits P5; and the CB 6, the CB 7, and the CB 8 are not punctured.

Only a few bits in the system bits in the CB 1 are punctured, and in this case, decoding of the CB 1 by the second device may not be affected, that is, the second device may successfully receive the CB 1. A lot of bits in the system bits in the CB 2 are punctured, and in this case, decoding of the CB 2 by the second device is severely affected, that is, the second device fails to receive the CB 2. Because all the bits in the system bits in the CB 3 are punctured, the second device fails to receive the CB 3. A part of bits in the redundancy bits in the CB 4 are punctured, and in this case, decoding of the CB 4 by the second device may be affected or may not be affected, that is, the second device may successfully receive the CB 4, or may fail to receive the CB 4. A part of bits in the redundancy bits in the CB 5 are punctured, and in this case, the second device may successfully receive the CB 5, or may fail to receive the CB 5. This is similar to the CB 4. Because the CB 6, the CB 7, and the CB 8 are not punctured, the second device may successfully receive the CB 6, the CB 7, and the CB 8.

According to the foregoing content, when bits in system bits in a CB are occupied (that is, punctured), there is severe adverse impact on whether the CB can be successfully received; however, when bits in redundancy bits in a CB are occupied (that is, punctured), there is little adverse impact on whether the CB can be successfully received. In this embodiment of the present invention, a CB that meets the condition necessary for system bits being occupied (that is, punctured) is referred to as a first CB. The condition necessary for the system bits being occupied is that a quantity of occupied bits in the system bits is greater than or equal to an occupancy threshold. The occupancy threshold may be set by a person skilled in the art based on an actual situation or experience. For example, the occupancy threshold may be set to 5%, and in this case, the first CB is a CB in which a quantity of occupied bits in system bits is greater than or equal to 5% of a quantity of the system bits. Further, the occupancy threshold in this embodiment of the present invention may be set based on a minimum value of a quantity of occupied bits in the system bits that definitely causes CB reception failure, so that the CB that meets the condition necessary for the system bits being occupied is the CB that definitely fails to be received due to puncturing of the system bits. Therefore, the CB 2 and the CB 3 shown in FIG. 3 are first CBs, and the CB 1, the CB 4, the CB 5, the CB 6, the CB 7, and the CB 8 are second CBs, where the second CBs are CBs that do not meet the condition necessary for the system bits being occupied, that is, CBs other than the first CBs in the plurality of CBs.

It should be noted that, in this embodiment of the present invention, the condition necessary for the system bits being occupied may also be that bits in the systems bits are occupied. To be specific, as long as bits in the system bits in the CB are occupied, it may be considered that the CB meets the condition necessary for the system bits being occupied. Alternatively, the condition necessary for the system bits being occupied may be set by a person skilled in the art to other content. This is not specifically limited.

In step 202, after the first device punctures a plurality of CBs, the first device may determine the first CB (such as the CB 2 and the CB 3 in FIG. 3) based on punctured positions of the plurality of CBs, and transmit, before the feedback time corresponding to the TB, the original data of the first CB to the second device. The first device can transmit the first CB to the second device in time without waiting for a feedback of the second device. This effectively shortens a waiting time for the first device to transmit the first CB, and improves efficiency of information transmission. Correspondingly, in step 204, the second device receives, before the feedback time corresponding to the TB, the original data of the first CB from the first device. Therefore, the second device can receive in time the original data of the first CB retransmitted by the first device, and therefore does not need to further transmit feedback information of the first CB to the first device. Therefore, feedback overheads are effectively reduced.

It should be noted that, the feedback time corresponding to the TB may be a specified time period or a specified time point after the second device receives the TB, and may be specifically determined based on an actual situation. This is not limited in the present invention. For example, if the second device receives the TB in an n^{th} TTI, the feedback time corresponding to the TB is an (n+4)^{th} TTI. Alternatively, the feedback time corresponding to the TB may be a time of feeding back a receiving status by the second device to the second device based on a decoding result after the second device receives the TB from the first device and decodes the CBs included in the TB.

Specifically, the feedback time corresponding to the TB may be a subsequently mentioned time of transmitting feedback information or a response message by the second device to the first device.

Further, the first device may further transmit first indication information and second indication information to the second device, where the first indication information is used to instruct not to transmit the feedback information of the first CB, the second indication information is used to indicate location information of an occupied resource of the second CB, and the second CB is a CB that does not meet the condition necessary for the system bits being occupied. Still further, the first device transmits the first indication information and the second indication information to the second device before the feedback time corresponding to the TB.

It should be noted that, for the original data of the first CB, the first indication information, and the second indication information that are transmitted by the first device, a transmission sequence thereof is not limited in this embodiment of the present invention. The first indication information may be transmitted earlier than the second indication information, or may be transmitted later than the second indication information, or the first indication information and the second indication information may be transmitted simultaneously. In this embodiment of the present invention, considering that the location information of the occupied resource of the second CB indicated by the second indication information can increase a possibility of successfully receiving the second CB, but the first CB definitely fails to be received because the first CB meets the condition necessary for the system bits being occupied, in this embodiment of the present invention, preferably the second indication information is transmitted earlier than the first indication information, so that the second device can receive the second indication information in time, and decode the second CB based on the location information of the occupied resource of the second CB, to increase the possibility of successfully receiving the second CB.

The following separately describes the first indication information and the second indication information in detail.

### (1) First indication information

The first device transmits, to the second device, the first indication information used to instruct not to transmit the feedback information of the first CB. The first indication information may include one or more of the following: (1) identifier information of the first CB; (2) identifier information of the second CB, where the second CB is a CB that does not meet the condition necessary for the system bits being occupied; and (3) location information of an occupied resource of the first CB. The identifier information of the CB may be a number of the CB, or may be other information used to uniquely identify the CB. In this embodiment of the present invention, the location information of the occupied resource of the first CB may be identifier information of an occupied resource element (Resource Element, RE) of the first CB, or may be identifier information of a resource block (Resource Block, RB). Specifically, when the first device allocates resources to a plurality of CBs, RBs are used as allocation units, where one RB includes 12 REs; and when the first device punctures a CB in the TB, RBs are also used as units. For example, if 12 or 24 REs are punctured, the first device may transmit identifier information of the punctured REs or identifier information of punctured RBs in the first CB to the second device.

Correspondingly, after receiving the first indication information, the second device may determine the first CB according to the first indication information, but does not transmit the feedback information of the first CB. In this embodiment of the present invention, the feedback information of the first CB is feedback information about the receiving status of the first CB after the second device receives the TB from the first device. In other words, after determining the first CB according to the first indication information, the second device does not need to feed back the specific receiving status of the first CB to the first device, and may subsequently feed back only feedback information used to indicate that the TB fails to be received, or a response message used to indicate the second CB that fails to be received, or a message used to indicate that the TB is successfully received.

Specifically, if the first indication information is the identifier information of the first CB, the second device may directly determine the first CB based on the identifier information of the first CB; if the first indication information is the identifier information of the second CB, the second device may determine a CB other than the second CB in the plurality of CBs as the first CB based on the identifier information of the second CB; or if the first indication information is the location information of the occupied resource of the first CB, because the second device may determine system bits and redundancy bits of each CB through calculation, the second device may further determine the CB that meets the condition necessary for the system bits being occupied, as the first CB based on identifier information of a punctured RE or identifier information of a punctured RB in the received CB.

It should be noted that, in this embodiment of the present invention, the first indication information may also include other information that can enable the second device to identify the first CB. Details are not illustrated again.

### (2) Second indication information

The first device transmits, to the second device, the second indication information used to indicate the location information of the occupied resource of the second CB. The location information of the occupied resource of the second CB may be identifier information of an occupied RE or identifier information of an occupied RB or identifier information of an occupied RB in the second CB. After receiving the second indication information, the second device may set data corresponding to the RE included in the second indication information to 0, to reduce interference caused by the punctured RE in a decoding process and increase the possibility of successfully receiving the second CB.

Correspondingly, after receiving the TB from the first device, the second device may decode, with reference to the received second indication information, the plurality of CBs included in the TB, and obtain, based on a decoding result, the second CB that fails to be received.

For example, it is assumed that the plurality of CBs included in the TB received by the second device are the CB 1, the CB 2, the CB 3, the CB 4, the CB 5, the CB 6, the CB 7, and the CB 8 shown in FIG. 3. Because the CB 2 and the CB 3 are the first CBs, the second device further receives original data of the CB 2 and the CB 3. Because the second CB is also partly punctured, the second device further receives the second indication information used to indicate the location information of the occupied resource of the second CB. In addition, the second device further receives the first indication information transmitted by the first device. On this basis, a possible execution manner is as follows: The second device decodes the received CB 1, the CB 2, the CB 3, the CB 4, the CB 5, the CB 6, the CB 7, and the CB 8 separately with reference to the second indication information, and determines, based on a decoding result, that CBs that fail to be received are the CB 2, the CB 3, and the CB 4. Then the second device may determine, based on the received original data of the CB 2 and the CB 3, that the CB 2 and the CB 3 are the first CBs and are successfully received, and exclude the CB 2 and the CB 3 from the CBs that fail to be received, to obtain that the second CB that fails to be received is the CB 4; or the second device may determine, according to the first indication information, that the CB 2 and the CB 3 are the first CBs, and exclude the CB 2 and the CB 3 from the CBs that fail to be received, to obtain that the second CB that fails to be received is the CB 4.

In the foregoing example, the second device may also determine the first CB based on the received original data of the first CB, and therefore does not transmit the feedback information of the first CB. Therefore, the first device in this embodiment of the present invention may not transmit the first indication information to the second device either, to save transmission resources and reduce signaling overheads.

For another example, it is assumed that the plurality of CBs included in the TB received by the second device are still the CB 1, the CB 2, the CB 3, the CB 4, the CB 5, the CB 6, the CB 7, and the CB 8 shown in FIG. 3, and the second device further receives the first indication information and the second indication information. On this basis, another possible execution manner is as follows: The second device may determine, according to the first indication information, that the first CBs are the CB 2 and the CB 3. Then the second device separately decodes the CB 1, the CB 4, the CB 5, the CB 6, the CB 7, and the CB 8 other than the first CBs in the received CB 1, CB 2, CB 3, CB 4, CB 5, CB 6, CB 7, and CB 8 with reference to the second indication information, and determines, based on a decoding result, that the second CB that fails to be received is the CB 4. The second device determines, based on the received original data of the CB 2 and the CB 3, that the CB 2 and the CB 3 are successfully received.

In the foregoing example, the second device may determine the first CB according to the received first indication information, and decode the CBs other than the first CB to directly obtain the second CB that fails to be received. On one hand, because the first CB definitely fails to be received, the second device may first not decode the first CB according to the first indication information in the decoding process, thereby saving processing resources. On the other hand, the second device may determine the first CB according to the first indication information and the original data of the first CB, and does not transmit the feedback information of the first CB, thereby better ensuring that the feedback overheads are effectively reduced.

In conclusion, in the foregoing step 202, the first device may also transmit the first indication information to the second device before the feedback time corresponding to the TB, where the first indication information is used to instruct not to transmit the feedback information of the first CB; and correspondingly, in step 204, the second device receives the first indication information from the first device before the feedback time corresponding to the TB. Alternatively, in the foregoing step 202, the first device may transmit the original data of the first CB and the first indication information to the second device before the feedback time corresponding to the TB; and correspondingly, in step 204, the second device receives the original data of the first CB and the first indication information from the first device before the feedback time corresponding to the TB. In other words, the first device may transmit a first message to the second device before the feedback time corresponding to the TB, where the first message may include the original data of the first CB and/or the first indication information, or the first message may include other content that can instruct the second device not to transmit the feedback information of the first CB. This is not specifically limited.

Further, based on a quantity of second CBs that fail to be received, the second device may feed back a receiving status to the first device after the second device determines the second CBs that fail to be received. Specifically, in a scenario, if the second device determines that all second CBs in the TB are successfully received, the second device may feed back information used to indicate successful reception to the first device, for example, an ACK. If the second device determines that the quantity of the second CBs that fail to be received is greater than or equal to a first threshold, the second device may transmit feedback information to the first device, where the feedback information is used to indicate that the TB fails to be received; and correspondingly, after receiving the feedback information, the first device retransmits the TB to the second device, that is, retransmits original data of the plurality of CBs. If the second device determines that the quantity of the second CBs that fail to be received is less than a first threshold, the second device may transmit a response message to the first device, where the response message is used to indicate all the second CBs that fail to be received in the TB; and correspondingly, after receiving the response message, the first device retransmits original data of the second CBs that fail to be received to the second device. A value of the first threshold may be set by a person skilled in the art based on experience and an actual situation.

In another scenario, if the second device determines that all second CBs in the TB are successfully received, the second device may feed back information used to indicate successful reception to the first device, for example, an ACK. If the second device determines that the quantity of the second CBs that fail to be received is greater than a second threshold, the second device may transmit feedback information to the first device, where the feedback information is used to indicate that the TB fails to be received; and correspondingly, after receiving the feedback information, the first device retransmits the TB to the second device, that is, retransmits original data of the plurality of CBs. If the second device determines that the quantity of the second CBs that fail to be received is less than or equal to a second threshold, the second device may transmit a response message to the first device, where the response message is used to indicate all the second CBs that fail to be received in the TB; and correspondingly, after receiving the response message, the first device retransmits original data of the second CBs that fail to be received. A value of the second threshold may be set by a person skilled in the art based on experience and an actual situation.

The following separately describes the feedback information and the response message that are used in the two scenarios.

In this embodiment of the present invention, the feedback information may be a NACK, or may be other information used to indicate that the TB fails to be received.

The response information may include identifier information of the second CBs that fail to be received. In this case, the first device may directly retransmit the original data of the second CBs to the second device based on the identifier information of the second CBs. Therefore, processing resources of the first device can be saved. In addition, in this embodiment of the present invention, the plurality of CBs are classified into first CBs and second CBs, and when the quantity of the second CBs that fail to be received is less than the first threshold or less than or equal to the second threshold, only identifier information of the second CBs that fail to be received is fed back. Therefore, in comparison with the manner of feeding back identifier information of all CBs that fail to be received in the prior art, the feedback overheads can be effectively reduced.

To further reduce the feedback overheads, in this embodiment of the present invention, after receiving the TB, the second device may set correspondences between a plurality of error identifiers and any i CBs in the plurality of CBs based on a first preset rule and the plurality of CBs included in the TB, where i = 1, ..., N. In the foregoing scenario, N is less than the first threshold, and in the another scenario, N is less than or equal to the second threshold. In this case, the response message transmitted by the second device to the first device may include an error identifier determined from the plurality of error identifiers and corresponding to the second CBs that fail to be received, thereby greatly reducing the feedback overheads.

The first preset rule may be predetermined by the first device and the second device, or may be determined and transmitted by the first device to the second device, or may be determined and transmitted by the second device to the first device.

Using the another scenario as an example, if the second device determines that the quantity of the second CBs that fail to be received is less than or equal to the second threshold, the second device may transmit a response message to the first device. Assuming that the second threshold is 3, when the quantity of the second CBs that fail to be received is less than or equal to 3, the second device transmits a response message to the first device. If the plurality of CBs included in the TB are the CB 1, the CB 2, the CB 3, the CB 4, the CB 5, the CB 6, the CB 7, and the CB 8, there are eight error identifiers corresponding to any one of the plurality of CBs, 28 error identifiers corresponding to any two of the plurality of CBs, and 56 error identifiers corresponding to any three of the plurality of CBs, that is, 92 error identifiers in total are required. Therefore, an error identifier may be indicated by using seven bits. Because the error identifiers correspond to all possible error combinations, seven bits can accurately feed back the second CBs that fail to be received, and therefore the feedback overheads are greatly reduced.

In this embodiment of the present invention, the second device may store the correspondences between the plurality of error identifiers and any i CBs in the plurality of CBs in a plurality of storage formats, for example, in a form of a table. This is not limited in this embodiment of the present invention. For example, the foregoing information is stored in the form of a table. Table 1 shows an example correspondences between a plurality of error identifiers and any i CBs.

**Table 1: Example of correspondences between a plurality of error identifiers and any i CBs**

| **Error combination** | **Any i CBs** | **Error identifier** |
|---|---|---|
| Error combination 1 | CB 1 | 0000001 |
| Error combination 2 | CB 2 | 0000010 |
| ... | ... | ... |
| Error combination 10 | CB 1, CB 2 | 0001000 |
| ... | ... | ... |
| Error combination 20 | CB 1, CB 2, CB 3 | 0010000 |
| ... | ... | ... |
| Error combination 92 | CB 6, CB 7, CB 8 | 1111111 |

It should be noted that, the 92 error combinations may randomly correspond to 7-bit error identifiers, as long as it is ensured that error identifiers corresponding to the 92 error combinations are different. This is not limited in this embodiment of the present invention. The correspondences in Table 1 are merely an example for description.

In this embodiment of the present invention, for a scenario in which the second device determines that all the second CBs in the TB are successfully received, information fed back by the second device to the first device and used to indicate successful reception may also be an error identifier. In other words, a combination about successful reception of all the second CBs may be added on a basis of the 92 error combinations, and a corresponding error identifier may be set, for example, may be set to 0000000.

The first device may also obtain a correspondence table based on the first preset rule, where content in the correspondence table is the same as that in Table 1.

As shown in Table 1, for example, if the second device determines that the second TB that fails to be received is the CB 1, the second device may feed back an error identifier 0000001 to the first device. Correspondingly, the first device receives the error identifier 0000001, and may determine, based on the correspondence table stored in the first device, the CB 1 corresponding to the error identifier 0000001, and transmit original data of the CB 1 to the second device. For another example, if the second device determines that the second TB that fails to be received is the CB 1, the CB 2, and the CB 3, the second device may feed back an error identifier 0010000 to the first device. Correspondingly, the first device receives the error identifier 0010000, and may determine, based on the correspondence table in the first device, the CB 1, the CB 2, and the CB 3 corresponding to the error identifier 0010000, and transmit original data of the CB 1, the CB 2, and the CB 3 to the second device.

It should be noted that, if there are a lot of possible error combinations, that is, if there are a lot of corresponding error identifiers, a lot of bits may be used consequently to indicate the error identifiers. On this basis, in this embodiment of the present invention, some possible error combinations may be selected from all the possible error combinations, and corresponding error identifiers are set. Therefore, the bits used to indicate the error identifiers are reduced, and the feedback overheads are reduced. Specifically, based on historical statistics data, error combinations with a relatively high frequency of reception failure may be selected from all the possible error combinations, and corresponding error identifiers are set, to ensure that an error identifier corresponding to the second CB can be determined as far as possible.

For example, 64 possible error combinations may be selected from the 92 possible error combinations, and correspondences between the 64 possible error combinations and error identifiers are set, so that the error identifiers may be indicated by using six bits. When a response message is fed back, only six bits need to be fed back to accurately feed back the second CB that fails to be received, and therefore the feedback overheads are further reduced.

It should be noted that, this embodiment of the present invention is also applicable to a case in which a TB includes one CB. In this case, if the CB included in the TB is a first CB, the first device may directly transmit original data of the first CB to the second device. Therefore, the second device does not need to transmit feedback information of the CB, and an effect of feedback overhead reduction can be achieved.

### Embodiment 2

In the foregoing Embodiment 1, corresponding processing is performed based on a plurality of CBs included in a TB. Considering that a TB may include a large quantity of CBs, this embodiment of the present invention further provides Embodiment 2. Specifically, CBs in the TB are grouped into a plurality of CB subgroups, and processing is performed based on the CB subgroups to effectively reduce processing resources. Further, in Embodiment 2, when the CBs included in the TB are grouped, CBs that intersect in frequency domain and are adjacent in timeslots may be grouped into one CB subgroup based on a second preset rule and a relationship between a plurality of CBs in timeslots. In other words, any one of the plurality of CB subgroups includes at least one CB, and the at least one CB included in the any one CB subgroup intersects in frequency domain and is adjacent in time domain. For example, intersection of two CBs in frequency domain specifically means that the two CBs intersect partly or completely in frequency domain.

For example, as shown in FIG. 4, each square represents one CB, a lateral axis represents time, and a vertical axis represents frequency. When the CBs in the TB are grouped, if the second preset rule specifies in advance that four CBs are grouped into one CB subgroup, a CB 1, a CB 2, a CB 3, and a CB 4 shown in FIG. 4 may be grouped into one CB subgroup, and other CBs having a location relationship similar to that of the CB 1, the CB 2, the CB 3, and the CB 4 are grouped into another CB subgroup.

It should be noted that, the foregoing is a scenario in which the CB 1, the CB 2, the CB 3, and the CB 4 are adjacent in time domain. In this embodiment of the present invention, the adjacency in time domain in this embodiment of the present invention may also be another scenario. For example, during specific grouping, the CB 1, the CB 3, and the CB 4 may also be grouped into one subgroup as CBs adjacent in time domain, and the CB 2 and other CBs are grouped into one subgroup, or the CB 2 is occupied due to another reason and may not be grouped into the subgroup of the CB 1, the CB 3, and the CB 4. In other words, the adjacency in time domain in this embodiment of the present invention is not limited to the scenario in which the CB 1, the CB 2, the CB 3, and the CB 4 shown in FIG. 4 are completely adjacent. This is not specifically limited. A person skilled in the art may set a scenario of adjacency in time domain based on an actual situation.

In this way, because CBs that fail to be received usually intersect in frequency domain, for CBs that are adjacent in time domain, CBs that may fail to be received may be grouped into one subgroup in this grouping manner as far as possible. Therefore, a quantity of subgroups that are subsequently fed back can be effectively reduced, and feedback overheads are further reduced.

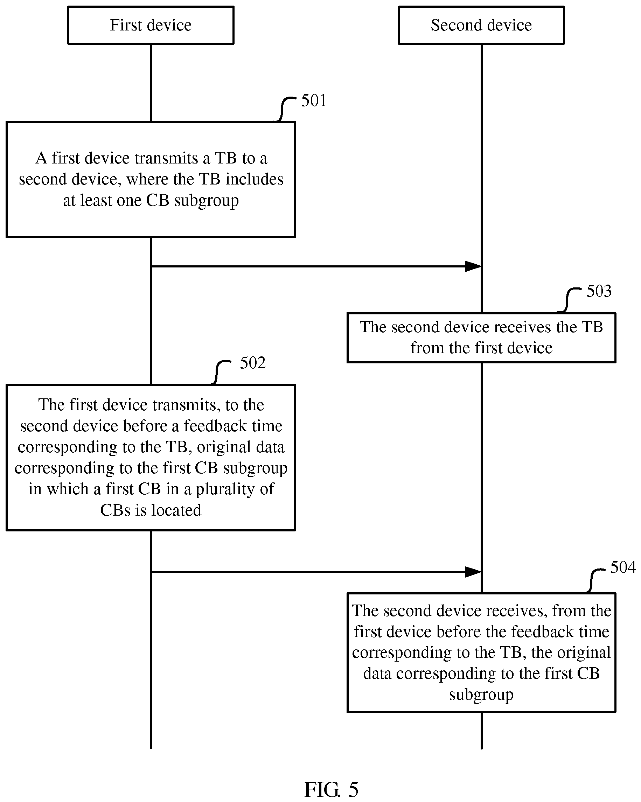

FIG. 5 is a schematic flowchart corresponding to an information transmission method according to Embodiment 2 of the present invention. As shown in FIG. 5, the method includes the following steps.

Step 501: A first device transmits a TB to a second device, where the TB includes at least one CB subgroup, any one of the plurality of CB subgroups includes at least one CB, the at least one CB included in the any CB subgroup intersects in frequency domain and is adjacent in time domain, the at least one CB subgroup includes a first CB subgroup and/or a second CB subgroup, the first CB group is a CB subgroup including at least one first CB, the second CB group is a CB subgroup not including the first CB, and the first CB is a CB that meets a condition necessary for system bits being occupied. For details, refer to descriptions about the first CB in Embodiment 1.

Step 502: The first device transmits, to the second device before a feedback time corresponding to the TB, original data corresponding to the first CB subgroup.

Step 503: The second device receives the TB from the first device.

Step 504: The second device receives, from the first device before the feedback time corresponding to the TB, the original data corresponding to the first CB subgroup.

It should be noted that, numbers of the foregoing steps are merely an example for description of an execution process. A specific sequence of the steps in this embodiment of the present invention is not limited, and some steps may be performed simultaneously, or may be performed without following the numbers. For example, step 502 and step 503 may be performed simultaneously, or step 503 may be performed before step 502.

The execution process in Embodiment 2 is the same as the execution process in Embodiment 1, and a difference lies in that processing in Embodiment 2 is performed based on the CB subgroup. In the following process of describing Embodiment 2, only some content different from Embodiment 1 is described. For details about other content, refer to Embodiment 1.

Specifically, based on a second preset rule and a plurality of CBs included in the TB transmitted to the second device, the first device may group the plurality of CBs into a plurality of CB subgroups. The second preset rule may be predetermined by the first device and the second device, or may be determined and transmitted by the first device to the second device, or may be determined and transmitted by the second device to the first device.

For example, the plurality of CBs included in the TB transmitted by the first device to the second device are a CB 1, a CB 2, a CB 3, a CB 4, a CB 5, a CB 6, a CB 7, and a CB 8. Table 2 shows an example of a plurality of CB subgroups.

**Table 2: Example of a plurality of CB subgroups**

| **CB subgroup** | **CBs included in the CB subgroup** | **Identifier information of the CB subgroup** |
|---|---|---|
| CB subgroup 1 | CB 1, CB 2, CB 3 | 000 |
| CB subgroup 2 | CB 4, CB 5 | 001 |
| CB subgroup 3 | CB 6 | 010 |
| CB subgroup 4 | CB 7 | 011 |
| CB subgroup 5 | CB 8 | 100 |

In step 501, the first device transmits a TB including at least one CB subgroup to the second device, and punctures CBs included in a plurality of CB subgroups, where a specific puncturing status is shown in FIG. 3. Correspondingly, in step 503, the second device receives the TB from the first device, and may also obtain a subgroup relationship table based on the second preset rule, where content of the subgroup relationship table obtained by the second device is the same as that in Table 1.

In step 502, after the first device punctures the CBs included in the plurality of CB subgroups, the first device may determine the first CB (such as the CB 2 and the CB 3 in FIG. 3) based on punctured positions of the CBs, and therefore further determine, based on Table 2, that the first CB subgroup is the CB subgroup 1. In this case, the first device may transmit original data of the CBs (the CB 1, the CB 2, and the CB 3) in the CB subgroup 1 to the second device. Correspondingly, in step 504, the second device receives, from the first device before the feedback time corresponding to the TB, the original data corresponding to the first CB subgroup. Therefore, the second device can receive in time the original data corresponding to the first CB subgroup retransmitted by the first device, and therefore does not need to further transmit feedback information of the CBs in the first CB subgroup to the first device. Therefore, feedback overheads are effectively reduced.

Further, the first device may further transmit first indication information and second indication information to the second device, where the first indication information is used to instruct not to transmit the feedback information of the first CB subgroup, and the second indication information is used to indicate location information of an occupied resource of the second CB. Still further, the first device transmits the first indication information and the second indication information to the second device before the feedback time corresponding to the TB.

The following separately describes the first indication information and the second indication information in detail.

### (1) First indication information

The first device transmits, to the second device, the first indication information used to instruct not to transmit the feedback information of the first CB subgroup. The first indication information may include one or more of the following: (1) identifier information of the first CB subgroup; (2) identifier information of the second CB subgroup; and (3) location information of an occupied resource of the first CB, which may be identifier information of an occupied RE or identifier information of an occupied RB in the first CB.

The identifier information of the CB subgroup may be a number of the CB subgroup, or may be other information used to uniquely identify the CB subgroup. For example, as shown in Table 2, the identifier information of the CB subgroup may be indicated by using bits. If eight CBs are grouped into five CB subgroups, identifier information of a CB subgroup may be indicated by using three bits.

Correspondingly, after receiving the first indication information, the second device may determine the first CB subgroup according to the first indication information, but does not transmit the feedback information of the first CB subgroup. Specifically, if the first indication information is the identifier information of the first CB subgroup, the second device may directly determine the first CB subgroup based on the identifier information of the first CB subgroup; if the first indication information is the identifier information of the second CB subgroup other than the first CB subgroup in the plurality of CB subgroups, the second device may determine a CB subgroup other than the second CB subgroup in the plurality of CB subgroups as the first CB subgroup; or if the first indication information is the location information of the occupied resource of the first CB, the second device may determine the first CB based on the location information of the occupied resource of the first CB, and further determine the first CB subgroup.

It should be noted that, in this embodiment of the present invention, the first indication information may also include other information that can enable the second device to identify the first CB subgroup. Details are not illustrated again.

### (2) Second indication information

The first device transmits, to the second device, the second indication information used to indicate location information of an occupied resource of a CB in the second CB subgroup in the plurality of CB subgroups. The location information of the occupied resource of the CB in the second CB subgroup may be identifier information of an occupied RE or identifier information of an occupied RB in the CB in the second CB subgroup.

It should be noted that, because the first device transmits, to the second device after determining the first CB subgroup, the original data corresponding to the first CB subgroup, the second device can successfully receive the CB in the first CB subgroup. Therefore, when the first device transmits the second indication information to the second device, the first device may transmit only the location information of the occupied resource of the CB in the second CB subgroup, so that subsequently the second device parses the CB in the second CB subgroup. In other words, because the first device retransmits original data of each CB in the first CB subgroup to the second device, each CB in the first CB subgroup can be successfully received. Therefore, the second indication information may include only the location information of the occupied resource of the CB in the second CB subgroup, so that the second device parses the CB in the second CB subgroup, thereby increasing a possibility of successful reception.

Correspondingly, after receiving the TB from the first device, the second device may decode, with reference to the received second indication information, the plurality of CBs included in the TB, and obtain, based on a decoding result, the second CB subgroup that fails to be received.

For example, it is assumed that a plurality of punctured CBs included in the TB received by the second device are the CB 1, the CB 2, the CB 3, the CB 4, the CB 5, the CB 6, the CB 7, and the CB 8 shown in FIG. 3, and the plurality of CB subgroups are shown in Table 2. Because the CB 2 and the CB 3 are first CBs, and the first CB subgroup in which the CB 2 and the CB 3 are located is the CB subgroup 1, the second device further receives the original data of the CB 1, the CB 2, and the CB 3 in the first CB subgroup. Because CBs in the second CB subgroup are also partly punctured, the second device further receives the second indication information used to indicate the location information of the occupied resource of the CB in the second CB subgroup. In addition, the second device further receives the first indication information transmitted by the first device. On this basis, a possible execution manner is as follows: The second device decodes CBs in the five received CB subgroups separately with reference to the second indication information, and determines, based on a decoding result, that CB subgroups that fail to be received are the CB subgroup 1 and the CB subgroup 2. Then the second device may determine, based on the received original data of the CB 1, the CB 2, and the CB 3 in the first CB subgroup, that the CB subgroup 1 is the first CB subgroup and is successfully received, and exclude the first CB subgroup from the CB subgroups that fail to be received, to obtain that the second CB subgroup that fails to be received is the CB subgroup 2; or the second device may determine, according to the first indication information, that the CB subgroup 1 is the first CB subgroup, and exclude the CB subgroup 1 from the CB subgroups that fail to be received, to obtain that the second CB subgroup that fails to be received is the CB subgroup 2.

In the foregoing example, the second device may also determine the first CB subgroup based on the received original data of the CB in the first CB subgroup, and therefore does not further transmit the feedback information of the first CB subgroup. Therefore, the first device in this embodiment of the present invention may not transmit the first indication information to the second device either, to save transmission resources and reduce signaling overheads.

For another example, it is assumed that the plurality of CBs included in the TB received by the second device are still the CB 1, the CB 2, the CB 3, the CB 4, the CB 5, the CB 6, the CB 7, and the CB 8 shown in FIG. 3, and the plurality of CB subgroups are shown in Table 2; and the second device further receives the first indication information and the second indication information. On this basis, another possible execution manner is as follows: The second device may determine, according to the first indication information, that the CB subgroup 1 is the first CB subgroup. Then the second device separately decodes CBs in the CB subgroup 2, the CB subgroup 3, the CB subgroup 4, and the CB subgroup 5 other than the CB subgroup 1 in the received CB subgroups, and determines, based on a decoding result, that the second CB subgroup that fails to be received is the CB subgroup 2. The second device determines, based on the received original data of the CB 1, the CB 2, and the CB 3 in the CB subgroup 1, that the CB subgroup 1 is successfully received.

In the foregoing example, the second device may determine the first CB subgroup according to the received first indication information, and decode the CBs in the CB subgroups other than the first CB subgroup to directly obtain the second CB subgroup that fails to be received. On one hand, because the first CB definitely fails to be received, the second device may first not decode the first CB subgroup according to the first indication information in the decoding process, thereby saving processing resources. On the other hand, the second device may determine the first CB subgroup according to the first indication information and the original data corresponding to the first CB subgroup, and does not transmit the feedback information of the first CB subgroup, thereby better ensuring that the feedback overheads are effectively reduced.

In conclusion, in the foregoing step 502, the first device may also transmit the first indication information to the second device before the feedback time corresponding to the TB, where the first indication information is used to instruct not to transmit the feedback information of the first CB subgroup; and correspondingly, in step 204, the second device receives the first indication information from the first device before the feedback time corresponding to the TB. Alternatively, in the foregoing step 502, the first device may transmit the original data of the CBs in the first CB subgroup in the plurality of CB subgroups and the first indication information to the second device before the feedback time corresponding to the TB; and correspondingly, in step 204, the second device receives the original data corresponding to the first CB subgroup in the plurality of CB subgroups and the first indication information from the first device before the feedback time corresponding to the TB. In other words, the first device may transmit a first message to the second device before the feedback time corresponding to the TB, where the first message may include the original data corresponding to the first CB subgroup and/or the first indication information, or the first message may include other content that can instruct the second device not to transmit the feedback information of the first CB subgroup. This is not specifically limited.

Further, based on a quantity of second CB subgroups that fail to be received, the second device may feed back a receiving status to the first device after the second device determines the second CB subgroups that fail to be received. Specifically, in a scenario, if the second device determines that the quantity of the second CB subgroups that fail to be received is greater than or equal to a first threshold, the second device may transmit feedback information to the first device, where the feedback information is used to indicate that the TB fails to be received; and correspondingly, after receiving the feedback information, the first device retransmits the TB to the second device, that is, retransmits original data of the plurality of CBs. If the second device determines that the quantity of the second CB subgroups that fail to be received is less than a first threshold, the second device may transmit a response message to the first device, where the response message is used to indicate the second CB subgroups that fail to be received in the plurality of CBs; and correspondingly, after receiving the response message, the first device retransmits original data of the second CB subgroups that fail to be received to the second device. A value of the first threshold may be set by a person skilled in the art based on experience and an actual situation.

In another scenario, if the second device determines that the quantity of the second CB subgroups that fail to be received is less than or equal to a second threshold, the second device may transmit a response message to the first device, or else, the second device transmits feedback information to the first device. A value of the second threshold may be set by a person skilled in the art based on experience and an actual situation.

As shown in Table 2, for example, if the second device determines that the second CB subgroup that fails to be received is the CB subgroup 2, the second device may feed back identifier information 001 of the CB subgroup 2 to the first device. Correspondingly, the first device receives the identifier information 001, and may determine, based on the subgroup relationship table in the first device, the CB 4 and the CB 5 corresponding to the error identifier 001, and transmit original data of the CB 4 and the CB 5 to the second device.

For another example, if the second device determines that second CBs that fail to be received are the CB 5 and the CB 6, the second device may feed back identifier information 001 of the CB 5 and identifier information 010 of the CB 6 to the first device. Correspondingly, the first device receives the identifier information 001 and 010, and may determine, based on the subgroup relationship table stored in the first device, the CB 4 and the CB 5 corresponding to the identifier information 001 and the CB 6 corresponding to the identifier information 010, and transmit original data of the CB 4, the CB 5, and the CB 6 to the second device.

In this embodiment of the present invention, if a quantity of CBs included in the TB is relatively large, and a quantity of CB subgroups obtained after the CBs in the TB are grouped is also relatively large, corresponding error identifiers may be set for any i subgroups based on a grouping result and based on a third preset rule in a manner of Embodiment 1. In other words, the second device may set correspondences between a plurality of error identifiers and any i CB subgroups in the plurality of CB subgroups, where i = 1, ..., N. In the foregoing scenario, N is less than the first threshold, and in the another scenario, N is less than or equal to the second threshold. In this case, the response message transmitted by the second device to the first device may include an error identifier determined from the plurality of error identifiers and corresponding to the second CB subgroup that fails to be received, thereby further reducing the feedback overheads.

For example, using the another scenario as an example, the second threshold is 3; if the plurality of CB subgroups included in the TB are the CB subgroup 1, the CB subgroup 2, the CB subgroup 3, the CB subgroup 4, and the CB subgroup 5, error identifiers may be indicated by using five bits. Table 3 shows an example of correspondences between a plurality of error identifiers and any i CB subgroups.

**Table 3: Example of correspondences between a plurality of error identifiers and any i CB subgroups**

| **Error combination** | **Any i CB subgroups** | **Error identifier** |
|---|---|---|
| Error combination 1 | CB subgroup 1 | 00001 |
| Error combination 2 | CB subgroup 2 | 00010 |
| ... | ... | ... |
| Error combination 10 | CB subgroup 1, CB subgroup 2 | 01000 |
| ... | ... | ... |
| Error combination 20 | CB subgroup 1, CB subgroup 2, CB subgroup 3 | 10000 |
| ... | ... | ... |
| Error combination 25 | CB subgroup 3, CB subgroup 4, CB subgroup 5 | 11110 |

It should be noted that, the 25 error combinations may randomly correspond to 5-bit error identifiers, as long as it is ensured that error identifiers corresponding to the 25 error combinations are different. This is not limited in this embodiment of the present invention. The correspondences in Table 3 are merely an example for description.

In this embodiment of the present invention, for a scenario in which the second device determines that all the second CB subgroups in the TB are successfully received, information fed back by the second device to the first device and used to indicate successful reception may also be an error identifier. In other words, a combination about successful reception of all the second CB subgroups may be added on a basis of the 25 error combinations, and a corresponding error identifier may be set, for example, may be set to 00000.

In this embodiment of the present invention, the first device may also obtain a subgroup correspondence table based on the third preset rule, where content in the subgroup correspondence table is the same as that in Table 3.

After determining the second CB subgroup that fails to be received, the second device may feed back an error identifier to the first device based on the correspondences in Table 3, and therefore reduce the feedback overheads.

### Embodiment 3

In the foregoing Embodiment 2, CBs in a TB are grouped into a plurality of CB subgroups, and processing is performed based on the CB subgroups. In other words, when a plurality of CBs are grouped into CB subgroups, a first CB and a second CB are not distinguished. On this basis, this embodiment of the present invention further provides Embodiment 3. Specifically, a plurality of second CBs included in a TB are grouped into a plurality of CB subgroups, and processing is performed based on the CB subgroups to effectively reduce processing resources. Further, in Embodiment 2, when CBs in the TB are grouped, CBs that are adjacent in timeslots and use a same subcarrier may be grouped into one CB subgroup based on relationships between the plurality of CBs in timeslots. In other words, any one of the plurality of CB subgroups includes at least one CB, and the at least one CB included in the any one CB subgroup intersects in frequency domain and is adjacent in time domain.

For a specific execution process of Embodiment 3, refer to the foregoing Embodiment 1 and Embodiment 2. Details are not described again herein.

In the foregoing embodiments of the present invention, the first device transmits the TB to the second device, and transmits, before the feedback time corresponding to the TB, the original data of the first CB included in the TB to the second device, where the first CB is the CB that meets the condition necessary for the system bits being occupied. In this case, the first device can transmit the first CB to the second device in time without waiting for the feedback of the second device. This effectively shortens the waiting time for the first device to transmit the first CB, and improves efficiency of information transmission. Further, the second device can receive in time the original data of the first CB retransmitted by the first device, without further transmitting the feedback information of the first CB to the first device. Therefore, the feedback overheads are effectively reduced. Alternatively, the first device may directly transmit the first indication information to the second device, and in this case, according to the first indication information, the second device may not directly transmit the feedback information of the first CB, thereby effectively reducing the feedback overheads. Alternatively, the first device may transmit the original data of the first CB and the first indication information to the second device, so that the first device can transmit the first CB to the second device in time, thereby further ensuring that the feedback overheads are effectively reduced.

For the foregoing method procedure, an embodiment of the present invention further provides a device. For specific content of the device, refer to the implementation of the foregoing method.

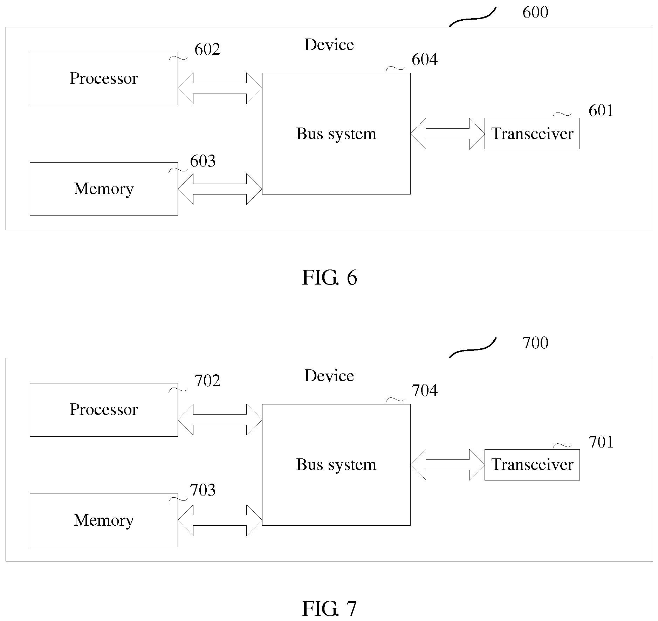

FIG. 6 is a schematic structural diagram of a device according to Embodiment 4 of the present invention. The device is configured to perform the foregoing method procedure performed by the first device. As shown in FIG. 6, the device 600 includes a transceiver 601, a processor 602, a memory 603, and a bus system 604.

The memory 603 is configured to store a program. Specifically, the program may include program code, and the program code includes a computer operation instruction. The memory 603 may be a random access memory (random access memory, RAM for short), or may be a non-volatile memory (non-volatile memory), for example, at least one disk storage. The figure shows only one memory. Certainly, a plurality of memories may also be disposed based on a requirement. The memory 603 may also be a memory in the processor 602.

The memory 603 stores the following elements: an executable module or a data structure, or a subset thereof, or an extended set thereof:
operation instructions, including various operation instructions, used to implement various operations; and
an operating system, including various system programs, used to implement various basic services and process hardware-based tasks.

The processor 602 controls an operation of the device 600. The processor 602 may also be referred to as a CPU (Central Processing Unit, central processing unit). In a specific application, components of the device 600 are coupled together by using the bus system 604. The bus system 604 may further include a power bus, a control bus, a status signal bus, and the like, in addition to a data bus. However, for clear description, various types of buses in the figure are marked as the bus system 604. For ease of description, FIG. 6 shows only an example.

The methods disclosed by the foregoing embodiments of this application may be applied to the processor 602 or implemented by the processor 602. The processor 602 may be an integrated circuit chip and has a signal processing capability. In an implementation process, steps in the foregoing methods can be implemented by using a hardware integrated logical circuit in the processor 602, or by using instructions in a form of software. The processor 602 may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 603. The processor 602 reads information in the memory 603 and completes the steps in the foregoing methods in combination with hardware of the processor.

FIG. 7 is a schematic structural diagram of a device according to Embodiment 5 of the present invention. The device is configured to perform the foregoing method procedure performed by the second device. As shown in FIG. 7, the device 700 includes a transceiver 701, a processor 702, a memory 703, and a bus system 704.

The memory 703 is configured to store a program. Specifically, the program may include program code, and the program code includes a computer operation instruction. The memory 703 may be a random access memory (random access memory, RAM for short), or may be a non-volatile memory (non-volatile memory), for example, at least one disk storage. The figure shows only one memory. Certainly, a plurality of memories may also be disposed based on a requirement. The memory 703 may also be a memory in the processor 702.

The memory 703 stores the following elements: an executable module or a data structure, or a subset thereof, or an extended set thereof:
operation instructions, including various operation instructions, used to implement various operations; and
an operating system, including various system programs, used to implement various basic services and process hardware-based tasks.

The processor 702 controls an operation of the device 700. The processor 702 may also be referred to as a CPU (Central Processing Unit, central processing unit). In a specific application, components of the device 700 are coupled together by using the bus system 704. The bus system 704 may further include a power bus, a control bus, a status signal bus, and the like, in addition to a data bus. However, for clear description, various types of buses in the figure are marked as the bus system 704. For ease of description, FIG. 7 shows only an example.

The methods disclosed by the foregoing embodiments of this application may be applied to the processor 702 or implemented by the processor 702. The processor 702 may be an integrated circuit chip and has a signal processing capability. In an implementation process, steps in the foregoing methods can be implemented by using a hardware integrated logical circuit in the processor 702, or by using instructions in a form of software. The processor 702 may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 703. The processor 702 reads information in the memory 703 and completes the steps in the foregoing methods in combination with hardware of the processor.

As can be seen from the foregoing content, in the foregoing embodiments of the present invention, the first device transmits the TB to the second device, and transmits, before the feedback time corresponding to the TB, the original data of the first CB included in the TB to the second device, where the first CB is the CB that meets the condition necessary for the system bits being occupied. In this case, the first device can transmit the first CB to the second device in time without waiting for the feedback of the second device. This effectively shortens the waiting time for the first device to transmit the first CB, and improves efficiency of information transmission. Further, the second device can receive in time the original data of the first CB retransmitted by the first device, without further transmitting the feedback information of the first CB to the first device. Therefore, the feedback overheads are effectively reduced. Alternatively, the first device may directly transmit the first indication information to the second device, and in this case, according to the first indication information, the second device may not directly transmit the feedback information of the first CB, thereby effectively reducing the feedback overheads. Alternatively, the first device may transmit the original data of the first CB and the first indication information to the second device, so that the first device can transmit the first CB to the second device in time, thereby further ensuring that the feedback overheads are effectively reduced.

A person skilled in the art should understand that the embodiments of the present invention may be provided as a method, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk storage, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention as defined by the appended claims.

## Claims

1. An information transmission method, comprising:
transmitting (201), by a first device, a transport block TB to a second device, wherein the TB comprises at least one code block CB, that was punctured by another transmission, the at least one CB comprises a first CB and/or a second CB, the first CB is a CB that meets a condition for systematic bits being occupied, and the second CB is a CB that does not meet the condition for the systematic bits being occupied, wherein the condition for the systematic bits being occupied is that a quantity of occupied bits in the systematic bits that were punctured by the another transmission is greater than or equal to an occupancy threshold; and
wherein, when the at least one CB comprises the first CB, transmitting (202), by the first device before a feedback time corresponding to the TB, the first CB to the second device.

2. The method according to claim 1, wherein the method further comprises: when the at least one CB comprises the second CB, transmitting, by the first device, second indication information to the second device, wherein the second indication information is used to indicate location information of an occupied resource of the second CB.

3. The method according to any one of claims 1 to 2, wherein the method further comprises:
when the TB comprises a plurality of second CBs,
receiving, by the first device, feedback information from the second device, wherein the feedback information is used to indicate that the TB fails to be received, and a quantity of the second CBs that fail to be received in the TB is greater than or equal to a first threshold.

4. The method according to any one of claims 1 to 2, wherein the method further comprises:
when the TB comprises a plurality of second CBs,
receiving, by the first device, a response message from the second device, wherein the response message is used to indicate all the second CBs that fail to be received in the TB, and a quantity of all the second CBs that fail to be received in the TB is less than or equal to a second threshold.

5. An information transmission method, comprising:
receiving (203), by a second device, a TB from a first device, wherein the TB comprises at least one CB, that was punctured by another transmission,
the at least one CB comprises a first CB and/or a second CB, the first CB is a CB that meets a condition for systematic bits being occupied, and the second CB is a CB that does not meet the condition for the systematic bits being occupied, wherein the condition for the systematic bits being occupied is that a quantity of occupied bits in the systematic bits that were punctured by the another transmission is greater than or equal to an occupancy threshold; and
wherein, when the at least one CB comprises the first CB, receiving (204), by the second device before a feedback time corresponding to the TB, the first CB from the first device.

6. The method according to claim 5, wherein the method further comprises:
when the at least one CB comprises the second CB,
receiving, by the second device, second indication information from the first device, wherein the second indication information is used to indicate location information of an occupied resource of the second CB.

7. The method according to any one of claims 5 to 6, wherein the method further comprises:
when the TB comprises a plurality of second CBs,
transmitting, by the second device, feedback information to the first device, wherein the feedback information is used to indicate that the TB fails to be received, and a quantity of the second CBs that fail to be received in the TB is greater than or equal to a first threshold.

8. The method according to any one of claims 5 to 6, wherein the method further comprises:
when the TB comprises a plurality of second CBs,
transmitting, by the second device, a response message to the first device, wherein the response message is used to indicate all the second CBs that fail to be received in the TB, and a quantity of all the second CBs that fail to be received in the TB is less than or equal to a second threshold.

9. A device, comprising a processor and a transceiver, wherein
the processor (602) is configured to: transmit a transport block TB to a second device by using the transceiver, wherein the TB comprises at least one code block CB, that was punctured by another transmission, the at least one CB comprises a first CB and/or a second CB, the first CB is a CB that meets a condition for systematic bits being occupied, and the second CB is a CB that does not meet the condition for the systematic bits being occupied, wherein the condition for the systematic bits being occupied is that a quantity of occupied bits in the systematic bits that were punctured by the another transmission is greater than or equal to an occupancy threshold; and
wherein, when the at least one CB comprises the first CB, transmit, before a feedback time corresponding to the TB, the first CB to the second device.

10. The device according to claim 9, wherein, when the at least one CB comprises the second CB, the processor is further configured to transmit second indication information to the second device by using the transceiver, wherein the second indication information is used to indicate location information of an occupied resource of the second CB.

11. The device according to any one of claims 9 to 10, wherein, when the TB comprises a plurality of second CBs, the processor is further configured to receive feedback information from the second device by using the transceiver, wherein the feedback information is used to indicate that the TB fails to be received, and a quantity of the second CBs that fail to be received in the TB is greater than or equal to a first threshold.

12. A device, comprising a processor and a transceiver, wherein
the processor (702) is configured to: receive a TB from a first device by using the transceiver, wherein the TB comprises at least one CB, that was punctured by another transmission, the at least one CB comprises a first CB and/or a second CB, the first CB is a CB that meets a condition for systematic bits being occupied, and the second CB is a CB that does not meet the condition for the systematic bits being occupied, wherein the condition for the systematic bits being occupied is that a quantity of occupied bits in the systematic bits that were punctured by the another transmission is greater than or equal to an occupancy threshold; and
wherein, when the at least one CB comprises the first CB, receive, before a feedback time corresponding to the TB, the first CB from the first device.

13. The method according to one of claims 4 and 8, wherein the response message comprises identifier information of the second CBs that fail to be received, or the response message comprises an error identifier, wherein the error identifier is used to indicate all the second CBs that fail to be received in the TB.

## Patentansprüche

1. Informationsübertragungsverfahren, umfassend:
Übertragen (201) eines Transportblocks, TB, von einer ersten Vorrichtung zu einer zweiten Vorrichtung, wobei der TB mindestens einen Codeblock, CB, umfasst, der durch eine andere Übertragung punktiert wurde, wobei der mindestens eine CB einen ersten CB und/oder einen zweiten CB umfasst, wobei der erste CB ein CB ist, der eine Bedingung für systematische Bits erfüllt, die belegt sind, und wobei der zweite CB ein CB ist, der die Bedingung für die systematischen Bits, die belegt sind, nicht erfüllt, wobei die Bedingung für die systematischen Bits, die belegt sind, ist, dass eine Anzahl von belegten Bits in den systematischen Bits, die von der anderen Übertragung punktiert wurden, größer als ein, oder gleich einem Belegungsschwellenwert ist; und
wenn der mindestens eine CB den ersten CB umfasst, Übertragen (202), vor einer Rückmeldungszeit, die dem TB entspricht, des ersten CB von der ersten Vorrichtung zu der zweiten Vorrichtung.

2. Verfahren nach Anspruch 1, wobei das Verfahren außerdem umfasst:
wenn der mindestens eine CB den zweiten CB umfasst, Übertragen von zweiten Anzeigeinformationen von der ersten Vorrichtung zu der zweiten Vorrichtung, wobei die zweiten Anzeigeinformationen verwendet werden, um Ortsinformationen einer belegten Ressource des zweiten CB anzuzeigen.

3. Verfahren nach einem der Ansprüche 1 bis 2, wobei das Verfahren außerdem umfasst:
wenn der TB eine Vielzahl von zweiten CBs umfasst, Empfangen, in der ersten Vorrichtung, von Rückmeldungsinformationen von der zweiten Vorrichtung, wobei die Rückmeldungsinformationen verwendet werden, um anzuzeigen, dass der TB gescheitert ist, empfangen zu werden, und wobei eine Anzahl der zweiten CBs, die daran gescheitert sind, in dem TB empfangen zu werden, größer als ein, oder gleich einem ersten Schwellenwert ist.

4. Verfahren nach einem der Ansprüche 1 bis 2, wobei das Verfahren außerdem umfasst:
wenn der TB eine Vielzahl von zweiten CBs umfasst, Empfangen, in der ersten Vorrichtung, einer Antwortnachricht von der zweiten Vorrichtung, wobei die Antwortnachricht verwendet wird, um anzuzeigen, dass alle zweiten CBs, die daran gescheitert sind, in dem TB empfangen zu werden, und eine Anzahl aller zweiten CBs, die daran gescheitert sind, in dem TB empfangen zu werden, kleiner als ein, oder gleich einem zweiten Schwellenwert ist.

5. Informationsübertragungsverfahren, umfassend:
Empfangen (203), in einer zweiten Vorrichtung, eines TB von einer ersten Vorrichtung, wobei der TB mindestens einen CB umfasst, der durch eine andere Übertragung punktiert wurde, wobei der mindestens eine CB einen ersten CB und/oder einen zweiten CB umfasst, wobei der erste CB ein CB ist, der eine Bedingung für systematische Bits erfüllt, die belegt sind, und wobei der zweite CB ein CB ist, der die Bedingung für die systematischen Bits, die belegt sind, nicht erfüllt, wobei die Bedingung für die systematischen Bits, die belegt sind, ist, dass eine Anzahl von belegten Bits in den systematischen Bits, die von der anderen Übertragung punktiert wurden, größer als ein, oder gleich einem Belegungsschwellenwert ist; und
wenn der mindestens eine CB den ersten CB umfasst, Empfangen (204), in der zweiten Vorrichtung, vor einer Rückmeldungszeit, die dem TB entspricht, des ersten CB von der ersten Vorrichtung.

6. Verfahren nach Anspruch 5, wobei das Verfahren außerdem umfasst:
wenn der mindestens eine CB den zweiten CB umfasst, Empfangen, in der zweiten Vorrichtung, von zweiten Anzeigeinformationen von der ersten Vorrichtung, wobei die zweiten Anzeigeinformationen verwendet werden, um Ortsinformationen einer belegten Ressource des zweiten CB anzuzeigen.

7. Verfahren nach einem der Ansprüche 5 bis 6, wobei das Verfahren außerdem umfasst:
wenn der TB eine Vielzahl von zweiten CBs umfasst, Übertragen von Rückmeldungsinformationen von der zweiten Vorrichtung zu der ersten Vorrichtung, wobei die Rückmeldungsinformationen verwendet werden, um anzuzeigen, dass der TB gescheitert ist, empfangen zu werden, und wobei eine Anzahl der zweiten CBs, die daran gescheitert sind, in dem TB empfangen zu werden, größer als ein, oder gleich einem ersten Schwellenwert ist.

8. Verfahren nach einem der Ansprüche 5 bis 6, wobei das Verfahren außerdem umfasst:
wenn der TB eine Vielzahl von zweiten CBs umfasst, Übertragen einer Antwortnachricht von der zweiten Vorrichtung zu der ersten Vorrichtung, wobei die Antwortnachricht verwendet wird, um alle zweiten CBs anzuzeigen, die daran gescheitert sind, in dem TB empfangen zu werden, und wobei eine Anzahl aller zweiten CBS, die daran gescheitert sind, in dem TB empfangen zu werden, kleiner als ein, oder gleich einem zweiten Schwellenwert ist.

9. Vorrichtung, die einen Prozessor und einen Transceiver umfasst, wobei der Prozessor (602) konfiguriert ist zum:
Übertragen eines Transportblocks, TB, zu einer zweiten Vorrichtung, indem der Transceiver verwendet wird, wobei der TB mindestens einen Codeblock, CB, umfasst, der durch eine andere Übertragung punktiert wurde, wobei der mindestens eine CB einen ersten CB und/oder einen zweiten CB umfasst, wobei der erste CB ein CB ist, der eine Bedingung für systematische Bits erfüllt, die belegt sind, und wobei der zweite CB ein CB ist, der die Bedingung für die systematischen Bits, die belegt sind, nicht erfüllt, wobei die Bedingung für die systematischen Bits, die belegt sind, ist, dass eine Anzahl von belegten Bits in den systematischen Bits, die von der anderen Übertragung punktiert wurden, größer als ein, oder gleich einem Belegungsschwellenwert ist; und
wenn der mindestens eine CB den ersten CB umfasst, Übertragen vor einer Rückmeldungszeit, die dem TB entspricht, des ersten CB zu der zweiten Vorrichtung.

10. Vorrichtung nach Anspruch 9, wobei wenn der mindestens eine CB den zweiten CB umfasst, der Prozessor außerdem konfiguriert ist zum Übertragen von zweiten Anzeigeinformationen zu der zweiten Vorrichtung, indem der Transceiver verwendet wird, wobei die zweiten Anzeigeinformationen verwendet werden, um Ortsinformationen einer belegten Ressource des zweiten CB anzuzeigen.

11. Vorrichtung nach einem der Ansprüche 9 bis 10, wobei wenn der TB eine Vielzahl von zweiten CBs umfasst, der Prozessor außerdem konfiguriert ist zum Empfangen von Rückmeldungsinformationen von der zweiten Vorrichtung, indem der Transceiver verwendet wird, wobei die Rückmeldungsinformationen verwendet werden, um anzuzeigen, dass der TB gescheitert ist, empfangen zu werden, und wobei eine Anzahl der zweiten CBs, die daran gescheitert sind, in dem TB empfangen zu werden, größer als ein, oder gleich einem ersten Schwellenwert ist.

12. Vorrichtung, die einen Prozessor und einen Transceiver umfasst, wobei der Prozessor (702) konfiguriert ist zum:
Empfangen eines TB von einer ersten Vorrichtung, indem der Transceiver verwendet wird, wobei der TB mindestens einen CB umfasst, der durch eine andere Übertragung punktiert wurde, wobei der mindestens eine CB einen ersten CB und/oder einen zweiten CB umfasst, wobei der erste CB ein CB ist, der eine Bedingung für systematische Bits erfüllt, die belegt sind, und wobei der zweite CB ein CB ist, der die Bedingung für die systematischen Bits, die belegt sind, nicht erfüllt, wobei die Bedingung für die systematischen Bits, die belegt sind, ist, dass eine Anzahl von belegten Bits in den systematischen Bits, die von der anderen Übertragung punktiert wurden, größer als ein, oder gleich einem Belegungsschwellenwert ist; und
wenn der mindestens eine CB den ersten CB umfasst, Empfangen, vor einer Rückmeldungszeit, die dem TB entspricht, des ersten CB von der ersten Vorrichtung.

13. Verfahren nach einem der Ansprüche 4 und 8, wobei die Antwortnachricht Kennungsinformationen der zweiten CBs umfasst, die daran gescheitert sind, empfangen zu werden, oder wobei die Antwortnachricht eine Fehlerkennung umfasst, wobei die Fehlerkennung verwendet wird, um alle zweiten CBs anzuzeigen, die daran gescheitert sind, in dem TB empfangen zu werden.

## Revendications

1. Procédé de transmission d'informations, comprenant les étapes consistant à :
transmettre (201), par un premier dispositif, un bloc de transport (TB) à un second dispositif, le TB comprenant au moins un bloc de code (CB), qui a été ponctionné par une autre transmission, l'au moins un CB comprenant un premier CB et/ou un second CB, le premier CB étant un CB qui satisfait à une condition concernant des bits systématiques qui sont occupés et le second CB étant un CB qui ne satisfait pas à la condition concernant les bits systématiques qui sont occupés, la condition concernant les bits systématiques qui sont occupés étant qu'un nombre de bits occupés parmi les bits systématiques qui ont été ponctionnés par l'autre transmission soit supérieur ou égal à un seuil d'occupation ; et
quand l'au moins un CB comprend le premier CB, transmettre (202), par le premier dispositif avant un temps de retour qui correspond au TB, le premier CB au second dispositif.

2. Procédé selon la revendication 1, le procédé comprenant en outre l'étape consistant à :
quand l'au moins un CB comprend le second CB, transmettre, par le premier dispositif, une seconde information d'indication au second dispositif, la seconde information d'indication étant utilisée pour indiquer une information de localisation d'une ressource occupée du second CB.

3. Procédé selon l'une quelconque des revendications 1 et 2, le procédé comprenant en outre l'étape consistant à :
quand le TB comprend une pluralité de seconds CB, recevoir, par le premier dispositif, une information de retour en provenance du second dispositif, l'information de retour étant utilisée pour indiquer que le TB échoue à être reçu, et un nombre des seconds CB qui échouent à être reçus dans le TB étant supérieur ou égal à un premier seuil.

4. Procédé selon l'une quelconque des revendications 1 et 2, le procédé comprenant en outre l'étape consistant à :
quand le TB comprend une pluralité de seconds CB, recevoir, par le premier dispositif, un message de réponse en provenance du second dispositif, le message de réponse étant utilisé pour indiquer tous les seconds TB qui échouent à être reçus dans le TB, et un nombre de tous les seconds CB qui échouent à être reçus dans le TB étant inférieur ou égal à un second seuil.

5. Procédé de transmission d'informations, comprenant les étapes consistant à :
recevoir (203), par un second dispositif, un TB en provenance d'un premier dispositif, le TB comprenant au moins un CB, qui a été ponctionné par une autre transmission, l'au moins un CB comprenant un premier CB et/ou un second CB, le premier CB étant un CB qui satisfait à une condition concernant des bits systématiques qui sont occupés et le second CB étant un CB qui ne satisfait pas à la condition concernant les bits systématiques qui sont occupés, la condition concernant les bits systématiques qui sont occupés étant qu'un nombre de bits occupés parmi les bits systématiques qui ont été ponctionnés par l'autre transmission soit supérieur ou égal à un seuil d'occupation ; et
quand l'au moins un CB comprend le premier CB, recevoir (204), par le second dispositif avant un temps de retour qui correspond au TB, le premier CB en provenance du premier dispositif.

6. Procédé selon la revendication 5, le procédé comprenant en outre l'étape consistant à :
quand l'au moins un CB comprend le second CB, recevoir, par le second dispositif, une seconde information d'indication en provenance du premier dispositif, la seconde information d'indication étant utilisée pour indiquer une information de localisation d'une ressource occupée du second CB.

7. Procédé selon l'une quelconque des revendications 5 et 6, le procédé comprenant en outre l'étape consistant à :
quand le TB comprend une pluralité de seconds CB, transmettre, par le second dispositif, une information de retour au premier dispositif, l'information de retour étant utilisée pour indiquer que le TB échoue à être reçu, et un nombre des seconds CB qui échouent à être reçus dans le TB étant supérieur ou égal à un premier seuil.

8. Procédé selon l'une quelconque des revendications 5 et 6, le procédé comprenant en outre l'étape consistant à :
quand le TB comprend une pluralité de seconds CB, transmettre, par le second dispositif, un message de réponse au premier dispositif, le message de réponse étant utilisé pour indiquer tous les seconds CB qui échouent à être reçus dans le TB, et un nombre de tous les seconds CB qui échouent à être reçus dans le TB étant inférieur ou égal à un second seuil.

9. Dispositif, comprenant un processeur et un émetteur-récepteur, dans lequel :
le processeur (602) est configuré pour : transmettre un bloc de transport (TB) à un second dispositif au moyen de l'émetteur-récepteur, le TB comprenant au moins un bloc de code (CB), qui a été ponctionné par une autre transmission, l'au moins un CB comprenant un premier CB et/ou un second CB, le premier CB étant un CB qui satisfait à une condition concernant des bits systématiques qui sont occupés et le second CB étant un CB qui ne satisfait pas à la condition concernant les bits systématiques qui sont occupés, la condition concernant les bits systématiques qui sont occupés étant qu'un nombre de bits occupés parmi les bits systématiques qui ont été ponctionnés par l'autre transmission soit supérieur ou égal à un seuil d'occupation ; et
quand l'au moins un CB comprend le premier CB, transmettre, avant un temps de retour qui correspond au TB, le premier CB au second dispositif.

10. Dispositif selon la revendication 9, dans lequel, quand l'au moins un CB comprend le second CB, le processeur est en outre configuré pour transmettre une seconde information d'indication au second dispositif au moyen de l'émetteur-récepteur, la seconde information d'indication étant utilisée pour indiquer une information de localisation d'une ressource occupée du second CB.

11. Dispositif selon l'une quelconque des revendications 9 et 10, dans lequel, quand le TB comprend une pluralité de seconds CB, le processeur est en outre configuré pour recevoir une information de retour en provenance du second dispositif au moyen de l'émetteur-récepteur, l'information de retour étant utilisée pour indiquer que le TB échoue à être reçu, et un nombre des seconds CB qui échouent à être reçus dans le TB étant supérieur ou égal à un premier seuil.

12. Dispositif, comprenant un processeur et un émetteur-récepteur, dans lequel :
le processeur (702) est configuré pour : recevoir un TB en provenance d'un premier dispositif au moyen de l'émetteur-récepteur, le TB comprenant au moins un CB, qui a été ponctionné par une autre transmission, l'au moins un CB comprenant un premier CB et/ou un second CB, le premier CB étant un CB qui satisfait à une condition concernant des bits systématiques qui sont occupés et le second CB étant un CB qui ne satisfait pas à la condition concernant les bits systématiques qui sont occupés, la condition concernant les bits systématiques qui sont occupés étant qu'un nombre de bits occupés parmi les bits systématiques qui ont été ponctionnés par l'autre transmission soit supérieur ou égal à un seuil d'occupation ; et
quand l'au moins un CB comprend le premier CB, recevoir, avant un temps de retour qui correspond au TB, le premier CB en provenance du premier dispositif.

13. Procédé selon l'une des revendications 4 et 8, dans lequel le message de réponse comprend une information d'identifiant des seconds CB qui échouent à être reçus ou le message de réponse comprend un identifiant d'erreur, l'identifiant d'erreur étant utilisé pour indiquer tous les seconds CB qui échouent à être reçus dans le TB.
